# EUROPEAN PATENT SPECIFICATION

(11) **EP 4 762 124 B1**
(45) Date of publication and mention of the grant of the patent: **04.11.2026**
(21) Application number: 25736951.2
(22) Date of filing: 27.06.2025
(51) Int. Cl.: C08J 11/24, C08J 11/28, H01B 3/30, G02C 7/02

(54) **METHOD OF PRODUCING A POLYTHIOURETHANE RESIN RAW MATERIAL FOR MANUFACTURING OF A SPECTACLE LENS SUBSTRATE**
VERFAHREN ZUR HERSTELLUNG EINES POLYTHIOURETHANRAHMES ZUR HERSTELLUNG EINES BRILLENGLASSUBSTRATES
PROCÉDÉ DE PRODUCTION D'UNE MATIÈRE PREMIÈRE DE RÉSINE DE POLYTHIOURÉTHANE POUR LA FABRICATION D'UN SUBSTRAT DE VERRE DE LUNETTES

(30) Priority: 05.07.2024 WO PCT/CN2024/103999
(43) Date of publication of application: 24.06.2026
(73) Proprietor: Carl Zeiss Vision International GmbH, 73430 Aalen (DE)
(72) Inventor: WINDBIEL, Julian, 73430 Aalen (DE); WAN, Yucheng, Guangzhou, Guangdong 510555 (CN); GLOEGE, Thomas, 73430 Aalen (DE)
(74) Representative: Lippert Stachow Patentanwälte Rechtsanwälte Partnerschaft mbB
(86) International application number: PCT/EP2025/068369
(87) International publication number: WO 2026/008510

(56) References cited:
- WO-A1-2021/157702
- WO-A1-2024/048389
- US-A1- 2023 365 770

## Description

### FIELD OF THE INVENTION

The present invention relates to a method of producing a polythiourethane resin raw material for manufacturing of a spectacle lens substrate, and a method for manufacturing a spectacle lens substrate.

### BACKGROUND ART

A wide variety of plastic materials are used in the optical industry today, particularly in the manufacture of spectacle lenses. Most of these are network polymers, more precisely duromers, and the others are thermoplastic materials. Typical network polymers are polyallyl carbonates such as polyallyl diglycol carbonates (PADC), polyurethanes (PUR), polyurethanes/polyureas (PUR/PUA), polythiourethanes (PTU) and polyepisulfides. Typical thermoplastic materials are polycarbonates (PC) and polyamides.

PTU materials are of particular importance here, as they enable particularly thin and light spectacle lenses and also offer excellent optical quality and mechanical stability. However, the associated monomers are produced in rather small quantities at relatively high costs. Due to their higher market value, it is particularly desirable to recycle these materials in a value-adding way.

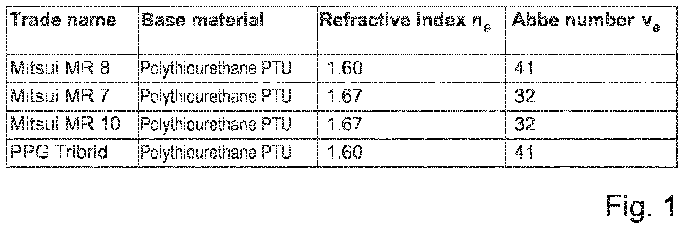

The table shown in Fig. 1 lists typical PTU materials used in the optical industry and the associated optical parameters.

During the production of the final optical articles, various types of mixed material waste are produced at different points in the manufacturing process, which are nowadays mainly incinerated or sent to landfill. This waste occurs in different qualities and quantities. This mainly includes scrap lenses, lens fragments as well as milling and grinding waste. The above-mentioned types of disposals have a negative impact both ecologically and economically.

The above-mentioned materials are resistant to environmental influences and thus contribute to the accumulation of such materials, including microplastics, in the environment, while incineration releases the carbon stored in the materials into the atmosphere as the greenhouse gas CO₂. This also increases the GWP (global warming potential) of these products. The combustion of sulfur-containing materials also produces SO₃ which must be removed from the exhaust gas. Finally, potentially valuable resources are lost through the incineration or disposal of these waste streams. The endeavor to recycle this waste and using it to create value is therefore obvious and desirable and contributes to a functioning circular economy.

The state of the art describes various recycling processes for PTUs as pure substances or mixed or contaminated materials, but with severe restrictions in terms of quantity and type of contaminants.

For example, US 2023/ 0 365 770 A1, which represents the closest state of the art, describes a process that converts a solid PTU resin material, e.g., milling/grinding waste, into a polymerizable polythiol mixture by means of alcoholysis or aminolysis resulting in depolymerization. The PTU material may contain foreign substances or impurities such as typical other optical materials, metal compounds, metals, catalysts, UV absorbers, dyes, oils, water, plasticizers, and demoulding agents. Hybrid materials made of PTU, and other polymers are also mentioned, however the mass fraction of PTU should preferably be at least 80 %, more preferably at least 90 %. Furthermore, the composition of the polythiol mixture obtained should have a main component with at least 50 wt%, preferably at least 60 %, more preferably at least 70 % and further preferably at least 80 %. The reaction conditions are set at 50 °C - 150 °C for 0.1 h - 20 h, and preferably 70 °C - 140 °C for 1 h - 10 h. The obtained polythiol mixture may be used for producing an optical article such as a lens.

Furthermore, US 2023/ 0 365 770 A1 does not describe the further whereabouts of the contained foreign materials, especially polyallyl carbonates, such as polyallyl diglycol carbonate, polyurethanes, and polyurethane/polyurea. It seems to be obvious that the impurities are produced directly as waste or that reaction products of the impurities are produced as waste. Therefore, only the PTU materials are recycled in this process, but no other materials from the optical industry.

Apart from the possibility of recycling partially contaminated PTUs described above, the following patent applications demonstrate the challenge of recycling material mixtures consisting of different PTUs.

WO 2023 / 153 484 A1 describes a method for preparing a polymerizable polythiol mixture from a PTU resin by chemolysis with a compound having an "active" hydrogen.

This typically means an alcohol, a thiol, or an amine. Further, a polythiol can be added to the obtained polythiol mixture to customize the polythiol composition. The development of this method shows the need to be able to obtain certain product mixtures during recycling in order to be able to produce valuable products.

JP 2023 - 085 102 A2 discloses a method for separating a specific PTU from at least two different PTUs via a solution of an inorganic salt. Further, the specific PTU is described as a reaction product consisting of m-xylene diisocyanate and 4-mercaptomethyl-1,8-dimercapto-3,6-dithioaoctane, while the other PTUs are described as reaction products of 2,5-bis(isocyanatomethyl)bicyclo-[2.2.1]-heptane, 2,6-bis(isocyanatomethyl)bicyclo-[2.2.1]-heptane, 4-mercaptomethyl-1,8-dimercapto-3,6-dithioaoctanes and pentaerythritol tetrakis-(3- mercaptopropionate). The specific, separated PTU is then subjected to chemolysis and further used as a polymerizable mixture. The amount of added PTU in the specific PTU is described as 0 - 10 wt%, i.e., the content of the specific PTU is at least 90 wt %.

JP 2023 - 019 137 A2 discloses a method in which a PTU mixture consisting of PTUs prepared from polythiols containing both ester bonds and those not containing ester bonds is subjected to aminolysis. Furthermore, the separation of the aminolysis products of the compounds with ester bonds from the aminolysis products of the compounds without ester bonds is described.

To summarize, two conclusions can be drawn from the above publications:
1. The recycling of PTU waste via alcoholysis/aminolysis is possible as long as no more than 60 wt% impurities are present in the PTU. A PTU raw material can be obtained that can be converted back into a PTU. The disadvantage is that the permitted impurities, which can also be valuable raw materials, accumulate as undefined waste and are not recycled.
2. The recycling of PTU waste that contains more than one type of PTU is particularly challenging and therefore requires special methods in order to be able to recycle PTUs in a valuable way. Thus, complex methods have to be used to recycle this PTU waste.

Apart from the above disclosures, patent application PCT/EP2024/068918 filed on July 4, 2024 describes a method for separating mixed waste, which occurs in particular in the optical industry, into specific material classes. The separation is carried out by means of selective physical and chemical process steps. More precisely, for example, a mixture of PC, PTU, polyallyl carbonate, PU, PUR/PUA and polyepisulfide can be separated. PC, a thiolysis product of PTU, an alcoholysis product of polyallyl carbonate, PU and PUR/PUA as a mixture, and polyepisulfide are obtained separately.

If the PTU contained in the mixture is a mixture of, for example, two PTUs (one containing ester bonds and one without ester bonds), these can also be obtained separately as a thiolysis product of only the first PTU material and as a thiolysis product of only the second PTU material. However, the resulting thiolysis products cannot be used for optical materials according to current knowledge.

### SUMMARY OF THE INVENTION

With respect to the mentioned state of the art, it is an objective of the present invention to provide an improved method which enables the recycling of PTU materials contained in waste of the optical industry, such as polymeric spectacle lenses and/or waste from the manufacture of polymeric spectacle lenses, which allows reuse of the recycled PTU as spectacle lens material. Further, it would be desirable to separate any other potentially valuable materials in such a way that the recycling of the PTUs is facilitated and the other materials can also be recycled.

The objective is achieved by a method of producing a polythiourethane resin raw material for manufacturing of spectacle lens substrate as claimed in claim 1, and a method for manufacturing a spectacle lens substrate as claimed in claim 16.

Throughout this specification the following definitions apply:
The term "aminolysis" refers to refers to a solvolysis, i.e., a reaction with a solvent, or with a lyonium ion or lyate ion involving the rupture of one or more bonds in the reacting solute, wherein the solvent is an amine ('solvolysis' in IUPAC Compendium of Chemical Terminology, 3rd ed. International Union of Pure and Applied Chemistry; 2006. Online version 3.0.1, 2019. https://doi.org/10.1351/goldbook.S05762) and wherein the solute can be a solid or a liquid.

The term "alcohol" typically refers to an organic compound that carries at least one hydroxy (-OH) functional group bound to a saturated carbon atom, e. g. R₃COH. Phenols are compounds having at least one hydroxy functional group where the hydroxy group is attached to a benzene ring or other arene ring. In the following, the term alcohol refers to alcohols in the typical sense and phenols alike.

The term "alcoholysis" refers to a solvolysis, i.e., a reaction with a solvent, or with a lyonium ion or lyate ion involving the rupture of one or more bonds in the reacting solute, wherein the solvent is an alcohol ('solvolysis' in IUPAC Compendium of Chemical Terminology, 3rd ed. International Union of Pure and Applied Chemistry; 2006. Online version 3.0.1, 2019. https://doi.org/10.1351/goldbook.S05762) and wherein the solute can be a solid or a liquid.

The term "aliphatic" refers to an acyclic or cyclic, saturated, or unsaturated carbon compound, excluding aromatic compounds ('aliphatic compounds' in IUPAC Compendium of Chemical Terminology, 3rd ed. International Union of Pure and Applied Chemistry; 2006. Online version 3.0.1, 2019. https://doi.org/10.1351/goldbook.A00217).

The term "alkali metal salt" refers to a salt of an alkali metal such as lithium, sodium, potassium.

The term "aprotic solvent" refers to a solvent without an acidic proton. Such solvents lack hydroxyl and amine groups and are typically aliphatic or aromatic hydrocarbons containing at least one heteroatom such as oxygen, nitrogen, or sulfur.

The term "catalyst" refers to a chemical substance which increases the rate of a chemical reaction without being consumed during this catalyzed reaction.

The term "chemical reactivity" refers to the ability of a chemical substance, e.g., a material contained in the waste, to interact chemically or to undergo a chemical reaction with another chemical substance. The term expresses a kinetic property. A species is said to be more reactive or to have a higher reactivity in some given context than some other (reference) species if it has a larger rate constant for a specified elementary reaction ('reactive (reactivity)' in IUPAC Compendium of Chemical Terminology, 3rd ed. International Union of Pure and Applied Chemistry; 2006. Online version 3.0.1, 2019. https://doi.org/10.1351/goldbook.R05180).

The term "chromatography" refers to a technique that allows the separation of a mixture of substances by different distribution of its individual components between a stationary and a mobile phase while the mobile phase moves in a definite direction.

The term "distillation" refers to a process of separating the components of a mixture of two or more chemically discrete substances by way of the selective boiling of the substances, separation of the vapor and the subsequent, separate condensation of the vapors.

The term "extraction" refers to a separation process in which one or more components are dissolved out of a mixture of substances, the extraction material, with the aid of an extraction agent. The term washing may also be used to refer to an extraction in which impurities are extracted from a mixture containing the desired compound.

The term "glycol" refers to dihydric alcohols (diols) in which the two hydroxy groups are on different carbon atoms, usually but not necessarily adjacent ('glycols' in IUPAC Compendium of Chemical Terminology, 3rd ed. International Union of Pure and Applied Chemistry; 2006. Online version 3.0.1, 2019. https://doi.org/10.1351/goldbook.G02654).

The term "liquid material" refers to a material in the liquid state of matter, i.e., in the state of a nearly incompressible fluid that conforms to the shape of its container but retains a nearly constant volume independent of pressure. The term "liquid material" may refer to a pure substance or a mixture of substances such as a solution.

The term "lysis product" refers to the reaction product obtained by depolymerization, i.e., the depolymerized part of the material or material mixture subjected to depolymerization or a component of the depolymerized part of the material or material mixture subjected to depolymerization. Depolymerization can, for example, be achieved by thiolysis and/or alcoholysis.

The term "material" refers to a substance or mixture of substances that constitutes an object, e.g., the waste.

The term "oligomer" or "oligomeric" refers to a molecule of intermediate relative molecular mass, the structure of which essentially comprises a small plurality of units derived, actually or conceptually, from molecules of lower relative molecular mass. A molecule can be regarded as having an intermediate relative molecular mass if it has properties which do vary significantly with the removal of one or a few of the units. If a part or the whole of the molecule has an intermediate relative molecular mass and essentially comprises a small plurality of units derived, actually or conceptually, from molecules of lower relative molecular mass, it may be described as oligomeric, or by oligomer used adjectivally ('oligomer molecule' in IUPAC Compendium of Chemical Terminology, 3rd ed. International Union of Pure and Applied Chemistry; 2006. Online version 3.0.1, 2019. https://doi.org/10.1351/goldbook.004286).

The term "polar solvent" refers to a solvent with polar molecules, i.e., molecules having a net dipole as a result of opposing charges from polar bonds arranged asymmetrically.

The term "polyacrylate" refers to a polymer manufactured by polymerization of an acrylate monomer, i.e., esters of acrylic acid.

The term "polyallyl carbonate" refers to a thermoset, i.e., crosslinked polymer manufactured by polymerization of allyl carbonate monomers. Specifically, the term "polyallyl diglycol carbonate" (PADC, CAS 25656-90-0) refers to a polymer manufactured by polymerization of allyl diglycol carbonate monomers, such as CR39.

The term "polycarbonate" (PC) refers to a group of thermoplastic polymers containing carbonate groups -O-(C=O)-O- in their chemical structures. Specifically, the term "polycarbonate" may refer to polycarbonates based on bisphenols, such as bisphenol A.

The term "polyepisulfide" refers to a group of polymers manufactured by polymerization of monomers that contain at least one episulfide group.

The term "polyisocyanate" refers to a class of compounds that contain two or more isocyanate groups -NCO in their structure.

The terms "polymer" and "polymeric" refer to natural or synthetic substances composed of macromolecules composed of many repeating subunits. Both terms comprise homopolymers and copolymers.

The term "polymerization" refers to the process of converting a monomer or mixture of monomers into a polymer ('polymerization' in IUPAC Compendium of Chemical Terminology, 3rd ed. International Union of Pure and Applied Chemistry; 2006. Online version 3.0.1, 2019. https://doi.org/10.1351/goldbook.P04740).

The term "polyol" refers to a class of compounds that contain two or more alcohol groups or hydroxy groups -OH in their structure.

The term "polythiol" refers to a class of compounds that contain two or more thiol groups -SH in their structure. In contrast, a "monothiol" only contains a single thiol group.

The term "polythiol mixture" refers to a composition consisting of several polythiols with a different chemical structure, e. g. different amounts of thiol groups.

The term "polythiourethane" (PTU) refers to a class of polymers composed of organic units joined by thiourethane links -S-(C=O)-(NH)-. A polythiourethane is typically produced by reacting a polyisocyanate with a polythiol.

The term "polythiourethane resin raw material" refers to a composition that can be used for the synthesis of a polythiourethane resin by polymerization. For example, the polythiourethane resin raw material may comprise a polythiol or a polythiol mixture that can be polymerized with a polyisocyanate to obtain the polythiourethane resin.

The term "polyurea" (PUA) refers to a polymer that is derived from the reaction product of an isocyanate component and an amine component and/or a class of polymers composed of organic units joined by urea links -(NH)-(C=O)-(NH)-.

The term "polyurethane" (PUR) refers to a class of polymers composed of organic units joined by carbamate (urethane) links -O-(C=O)-(NH)-. A polyurethane is typically produced by reacting a polyisocyanate with a polyol.

The term "purification" refers to physical and/or chemical separation of a chemical substance of interest from foreign or contaminating substances.

The term "rectification" refers to a thermal separation process in which the supply of thermal energy results in vaporization of more volatile components in a composition or mixture to be separated. It is closely related to the process of distillation. In contrast to distillation, rectification uses repeated cycles of thermal separation to achieve higher purity levels. Rectification may involve the use of a so-called fractionating or rectification column.

The term "reaction product" refers to one or more species formed as a result of one or more chemical reactions, e.g., alcoholysis and/or aminolysis, during performing the method of producing a polythiourethane resin raw material. The reaction product comprises the polythiourethane resin raw material or consists of the polythiourethane resin raw material.

The term "solution" refers to a homogeneous mixture composed of two or more substances, i.e., at least one substance, the solute, dissolved in at least one other substance, the solvent.

The term "spectacle lens" refers to an ophthalmic lens worn in front of, but not in contact with, the eyeball (ISO 13666:2019(E), section 3.5.2), where an ophthalmic lens is a lens intended to be used for purposes of measurement, correction and/or protection of the eye, or for changing its appearance (ISO 13666:2019(E), section 3.5.1).

The term "spectacle lens substrate" refers to a piece of optical material that is used during the manufacturing process of a spectacle lens, i.e. precursors of a finished lens (ISO 13666:2019(E), section 3.8.7), an uncut lens (ISO 13666:2019(E), section 3.8.8) or an edged lens (ISO 13666:2019(E), section 3.8.9). Suitable precursors of the finished lens are for example rough blanks, i.e. a lens shaped piece of optical material with neither side having finished surfaces, or semi-finished lens blanks, wherein the term "semi-finished lens blank" refers to a piece of optical material with one optically finished surface for the making of a spectacle lens (ISO 13666:2019(E), section 3.8.1).

The term "strong basic catalyst" refers to organic catalysts featuring a pka (in acetonitrile) of the conjugate acid of 10 or higher wherein pka is the negative base -10 logarithm of the acid dissociation constant Ka of the solution (in acetonitrile).

The term "substance" refers to a chemical substance which is a form of matter having a constant chemical composition and which is best characterized by the entities (molecules, formula units, atoms) it is composed of. Physical properties such as density, refractive index, electric conductivity, melting point etc. characterize the chemical substance by characteristic properties ('chemical substance' in IUPAC Compendium of Chemical Terminology, 3rd ed. International Union of Pure and Applied Chemistry; 2006. Online version 3.0.1, 2019. https://doi.org/10.1351/goldbook.C01039).

The term "thiol" refers to an organosulfur compound that carries at least one thiol functional group -SH bound to a saturated carbon atom, e.g., R₃CSH, where R represents an alkyl or other organic substituent. Thiophenols are compounds having at least one thiol functional group where the thiol group is attached to a benzene ring or other arene ring. In the following, the term thiol refers to thiols in the typical sense and thiophenols alike. Thiols are sulfur analogues of alcohols, i.e., sulfur takes the place of oxygen in the hydroxyl group of an alcohol.

The term "thiol-ene reaction" refers to a chemical reaction between a thiol R-SH and an alkene R₂C=CR₂ to form a thioether R-S-R'.

The term "thiolysis" refers to a solvolysis, i.e., a reaction with a solvent, or with a lyonium ion or lyate ion involving the rupture of one or more bonds in the reacting solute, wherein the solvent is a thiol ('solvolysis' in IUPAC Compendium of Chemical Terminology, 3rd ed. International Union of Pure and Applied Chemistry; 2006. Online version 3.0.1, 2019. https://doi.org/10.1351/goldbook.S05762) and wherein the solute can be a solid or a liquid.

The term "thiourethane-based material" refers to an oligomeric or polymeric material comprising thiourethane links -S-(C=O)-(NH)-, for example a resin material and/or a depolymerized resin material containing thiourethane links. The term may further refer to a mixture of an oligomeric or polymeric material comprising thiourethane links -S-(C=O)-(NH)- and the thiolysis reagent that has been used to prepare the thiourethane-based material.

The term "temperature control" refers to running a chemical reaction, such as thiolysis, at a specified reaction temperature or by applying a specified temperature profile.

The term "time control" refers to running a chemical reaction, such as thiolysis, for a specified period of time. After expiry of this time period, the reaction is stopped and already reacted material, e.g., depolymerized material, can be separated from materials un-reacted.

The term "waste" refers to materials, substances, or by-products to be eliminated or discarded as no longer useful or required. Waste from the manufacture of polymeric spectacle lenses may include scrap lenses and lens substrates as well as manufacturing residues such as grinding and milling residues. Waste of polymeric spectacle lenses may include spectacle lenses no longer needed, for example due to damage or altered ophthalmic diseases.

The articles "a", "an", and "the" as used in this specification and the appended claims include plural referents unless expressly and unequivocally limited to one referent.

The term "and/or" as used herein, when used in a series of two or more elements, means that any of the listed elements may be used alone, or any combination of two or more of the listed elements may be used. For example, when describing the usage of methods A, B, and/or C, method A alone; B alone; C alone; A and B in combination; A and C in combination; B and C in combination; or A, B, and C in combination may be used.

The term "comprising" means various compositions, compounds, steps and the like can be conjointly employed in the present invention. Accordingly, the term "comprising" encompasses the more restrictive terms "consisting essentially of" and "consisting of". The terms "comprising" and "containing" may be used synonymously.

In a first aspect, the invention provides a method of producing a polythiourethane resin raw material, for example a polythiol or a polythiol mixture, for manufacturing of spectacle lens substrates. The method comprises a reaction step wherein a composition comprising or consisting of a liquid thiourethane-based material is treated by alcoholysis and/or aminolysis to obtain a reaction product.

Preferably, the thiourethane-based material to be treated by alcoholysis and/or aminolysis is a liquid material at least in the temperature range from 10 °C to 250 °C, preferably in a temperature range from 15 °C to 160 °C, more preferably in a temperature range from 20 °C to 140 °C, even more preferably in a temperature range from 20 °C to 100 °C, at standard atmospheric pressure, i.e., a pressure of 101,325 Pa. The liquid state of the thiourethane-based material can, for example, be attributed to the thiourethane-based material itself and/or due to the presence of a thiolysis reagent or residues of a thiolysis reagent, which avoid a phase transition from the liquid to solid state.

The reaction product may be regarded as a depolymerization product as both aminolysis and alcoholysis lead to depolymerization of the thiourethane-based material by attacking the thiourethane links. The reaction product may contain solvents, carbamate compounds, urea compounds, thiourethane compounds, and/or alcoholysis or aminolysis reagent in addition to the target polythiol or polythiols.

The thiourethane-based material may originate from waste of polymeric spectacle lenses and/or waste from the manufacture of polymeric spectacle lenses. This enables recycling of such waste into valuable recycling products and contributes to environmental protection.

In contrast to a solid thiourethane-based material, the liquid material has no limitation in its reactivity due to the presence of phase boundaries, as is the case with the solid waste used in US 2023/ 0 365 770 A1. Thus, using a liquid thiourethane-based material enables the use of lower reaction temperatures and/or less reaction time for the alcoholysis or aminolysis, respectively, i.e., the use of milder reaction conditions. The polythiourethane resin raw material can be produced more efficiently and with less environmental impact.

In a specific development, the thiourethane-based material may be a solution. For example, the solution may comprise a thiolysis reagent as solvent and/or any other solvents, such as pyridine, used in a thiolysis step to be performed before the reaction step as described below.

The use of a solution enables even shorter reaction times as intermixing of the reaction partners is achieved more easily.

In a further development, the thiourethane-based material may comprise an oligomeric thiourethane-based material or may consist of oligomeric thiourethane-based material.

An oligomeric thiourethane-based material may decrease the reaction time needed for depolymerization even more due to its lower molecular weight as compared to a polymeric thiourethane-based material.

In a further development, the content of the thiourethane-based material in the composition may be at least 80 wt%, preferably at least 90 wt%. In other words, the content of foreign materials in the composition may less than 20 wt%, preferably less than 10 wt%.

Such a low content of foreign materials may reduce the need for separation and purification steps. Moreover, it may facilitate the reuse of obtained materials.

In a further development, the reaction step may be carried out at a temperature below 50 °C, for example at a temperature below 40 °C.

Such a low reaction temperature may contribute to less energy consumption during the process of producing the polythiourethane resin raw material.

In a further development, the reaction step may be carried out for a time period of less than 1 h, for example less than 30 min.

Such a short reaction time may contribute to less energy consumption during the process of producing the polythiourethane resin raw material.

In a further development, the method may comprise a separation step, wherein a polythiol or a polythiol mixture is separated from the reaction product, i.e., the separation step is carried out after the reaction step. Separation can, for example, be carried out by at least one of distillation, rectification, extraction, filtration and separation by chromatography.

The separation of the polythiol or polythiol mixture enables further processing, e.g., polymerization, of the separated polythiol or polythiol mixture leading to high-quality products without impurities.

In a further development, the method may comprise a purification step before the reaction step wherein the composition comprising the thiourethane-based material is purified.

In other words, the composition used in the reaction step may be purified before using. Preferably, purification may comprise the removal of a thiolysis reagent, especially in case the thiol used as thiolysis reagent is not a thiol used to produce the original PTU. In this case, purification may facilitate the separation of the polythiol or polythiol mixture in the separation step and increase the yield.

Purification may comprise concentrating the thiourethane-based material to reduce the amount of alcoholysis and/or aminolysis reagent and/or reaction time during alcoholysis and/or aminolysis.

Purification can be carried out by at least one of distillation, rectification, extraction, and separation by chromatography.

Alternatively, or additionally, the purification step may comprise the extraction of the thiolysis reagent as an alkali metal salt in aqueous solution. For this purpose, the composition to be purified is mixed with an alkali metal-containing base and water. Optionally, an organic solvent that cannot be mixed with water can be added. The resulting aqueous phase comprises the alkali metal salts of the thiolysis reagent. The organic phase comprises the alkali metal salts of the thiourethane-based material and the organic solvent, if used.

The aqueous phase can then be washed with an organic solvent and neutralized by adding an acid. The alkali metal salts of the thiolysis reagent are converted into the thiolysis reagent and can be directly obtained by distillation. Alternatively, the thiolysis reagent can be extracted from the aqueous solution with an organic solvent and obtained from the organic extract after removal of the solvent. The content of thiolysis reagent before and/or after purification can be determined by known and suitable methods, for example by high performance liquid chromatography and the integration of the corresponding signals of the thiolysis reagent in comparison with a solution of the thiolysis reagent of known concentration.

The organic phase, which comprises the alkali metal salts of the thiourethane-based material can be neutralized with an acid, extracted with water and dried. The resulting thiourethane-based material without thiolysis reagent can then be further processed in the reaction step.

Extracting the thiolysis regent as an alkali metal salt enables the recovery of the thiolysis reagent and its reuse contributing to less environmental impact.

In a further development, the method may comprise a thiolysis step before the reaction step, wherein a composition comprising or consisting of polythiourethane, e.g., a polythiourethane resin, is treated by thiolysis.

The polythiourethane content in the composition comprising the polythiourethane may be less than 40 wt%. Although a high polythiourethane content is desirable, the suggested method can be carried out even if the polythiourethane content is less than 40 wt%. This enables recycling of waste comprising low PTU contents that would otherwise be discarded.

Thiolysis occurs by reacting the polythiourethane with a thiolysis reagent such as a thiol leading to the break of the thiourethane links contained in the polythiourethane. This may lead to depolymerization.

The composition comprising or consisting of polythiourethane may be waste of polymeric spectacle lenses and/or waste from the manufacture of polymeric spectacle lenses.

Performing thiolysis prior to the reaction step, with or without the purification step in between, may provide a liquid and/or oligomeric thiourethane-based material, e.g., a solution, from waste of polymeric spectacle lenses and/or waste from the manufacture of polymeric spectacle lenses.

For performing thiolysis, the composition comprising the polythiourethane, e.g., waste or remaining residue obtained from previous treatment steps, may be mixed with a solvent or mixture of solvents, i.e., thiolysis can be carried out with or without a solvent. Further, a thiolysis reagent is added. Moreover, a catalyst for promoting thiolysis can be added. The mixture is stirred at a certain temperature, e.g., a temperature within the range from 20 °C to 100 °C, preferably from 50 °C to 65 °C, for a certain time, e.g., a time period within the range from 30 minutes to 7 days, preferably 30 minutes to 8 hours, with the aim of depolymerizing polythiourethanes, preferably at least to such an extent that polythiourethanes are completely dissolved and can consequently be separated from the remaining solid substances in a downstream filtration step.

Possible catalysts for promoting thiolysis are basic organic catalysts, such as but not limited to catalysts that are also suitable for transesterifications. Suitable basic organic catalysts may feature a pka (in acetonitrile) of the conjugate acid of 10 or higher such as but not limited to triazabicyclodecanes like 1,5,7-triazabicyclo[4,4,0]dec-5-ene (TBD) or 7-methyl-1,5,7-triazabicyclo(4.4.0)dec-5-ene, diazabicycloundecenes like 1,8-diazabicyclo[5.4.0]undec-7-ene (DBU), 1,1,3,3-tetramethylguanidine, 1,5-diazabicyclo[4.3.0]non-5-ene, 1,4-diazabicyclo[2.2.2]octane, 1,4-diazabicyclo[2.2.2]octane, or 2,2,6,6-tetramethylpiperidin. Triazabicyclodecenes such as TBD (CAS: 5807-14-7) are preferred due their suiting combination of basicity and limited nucleophilicity, thus, increasing thiolysis efficiency while preventing side reactions.

Possible solvents may be organic polar aprotic solvents, which are typically aliphatic or aromatic hydrocarbons containing at least one heteroatom such as oxygen, nitrogen, sulfur and are non-protogenic under the given conditions. Example compounds are N,N-dimethylformamide (DMF), dimethyl sulfoxide (DMSO) or 1-Methylpyrrolidin-2-one (NMP) and others, but these may sometimes lead to unwanted side reactions such as oxidation and formation of disulfides. A preferred solvent that can be used for thiolysis is pyridine as pyridine rarely leads to unwanted side reactions. All above mentioned solvents may be used alone or in combinations of at least two different solvents.

Preferably, pyridine can be used as solvent in all method steps using a solvent. Hence, drying after each method step might be omitted as the same solvent would be added anyways. For example, both thiolysis and alcoholysis/aminolysis can be carried out in pyridine.

The thiolysis reagent may be at least one reagent selected form the group consisting of monothiols, dithiols, trithiols, and tetrathiols. Preferred thiolysis reagents are polythiols, i.e., thiols with two or more thiol groups, more preferably dithiols or trithiols. Thus, at least one dithiol or at least one trithiol or a mixture of dithiols and trithiols can be preferably used as a thiolysis reagent. Using polythiols may enable easier processing of the thiolysis products into new materials as more reactive groups are introduced into the thiolysis products. The use of a monothiol may facilitate its separation, if needed, due to its high volatility as compared to polythiols.

Preferably, aliphatic thiols can be used as thiolysis reagents as aliphatic thiols exhibit a higher reactivity compared to other thiols such as aromatic thiols. Possible thiolysis reagents that are suitable for the thiolysis are thiols such as but not limited to ethylene glycol bis-mercaptoacetate, ethylene glycol bis(3-mercaptopropionate), 1,1,1-tris(3-mercaptopropionyloxymethyl)propane, pentaerythritol tetra(3-mercaptopropionate), ethane-1,2-dithiol, 2,2'-[propane-1,3-diylbis(oxy)]di(ethane-1-thiol), 2,3-bis((2-mercaptoethyl)thio)-1-propanethiol, (bis(2-(2-mercaptoethylthio)-3-mercaptopropyl)sulfide). If a polythiol is used as thiolysis reagent, the resulting lysis products are polythiols.

Preferably, the thiolysis reagent may comprise at least one thiol identical to a thiol used for the synthesis of the polythiourethane to be treated by thiolysis. In other words, the thiol or thiol mixture used as thiolysis reagent can be selected from the group of polythiols that was also used to produce the polythiourethane to be treated by thiolysis.

For example, 4-(mercaptomethyl)-1,8-dimercapto-3,6-dithiaoctane (CAS No. 131538-00-6) may be used as thiolysis reagent, especially if the polythiourethane is MR7.

To enhance the reaction rate of the thiolysis, a thiolysis catalyst such as 1,5,7-triazabicyclo[4.4.0]dec-5-ene (CAS No. 5807-14-7) can be used. Possible catalysts are basic organic catalysts with a pka (in acetonitrile) of 10 or higher.

Potential further components in the composition comprising polythiourethane can be recovered as solids by filtration and further processed, e.g., by different recycling processes.

The filtrate obtained contains the reaction products of PTU and thiolysis reagent in addition to the thiolysis reagent used, the catalyst and possibly the solvent. The catalyst can be removed by washing, for example with water or slightly acidic aqueous solutions. The solvent can be removed, for example, by evaporation. The reaction products of the PTU and thiolysis reagent contain only structural elements of the lysed PTU if a thiol used to produce the PTU was used as a thiolysis reagent.

In a further development, different polythiourethanes can be separated during the thiolysis step, e.g., by carrying out thiolysis under time control and/or temperature control.

If the composition comprising or consisting of polythiourethane contains different PTU materials, it can be advantageous or desirable to separate the PTU materials contained within their substance class, for example PTUs which contain ester bonds from PTUs which do not contain ester bonds.

Such a separation can be achieved by sequential depolymerization and separation of various PTU materials by thiolysis based on their reactivity to thiolysis conditions, for example as described in patent application PCT/EP2024/068918 filed on July 4, 2024. For example, MR7 and MR8 can be separated from each other by running thiolysis under time control. Temperature control may be additionally applied to enhance the separation effect. For example, MR7 can be depolymerized by thiolysis at a temperature of about 30 °C after a reaction time of about 30 minutes - 60 minutes. MR8 can be depolymerized by thiolysis at a temperature of about 60 °C after a reaction time of about 100 minutes - 7 hours. If thiolysis is carried out at a temperature of about 30 °C for a time period of about 60 minutes - 100 minutes, a mixed thiolysis product of MR7 and MR8 is obtained. Thus, if separation of MR7 and MR8 is required, such conditions should be avoided. A separation of the mixed thiolysis product of MR7 and MR8 is needed by a filtration procedure before a subsequent thiolysis to depolymerize MR8 is performed.

To further enhance the separation effect, the particle size of the materials to be separated can be adjusted prior to thiolysis, e.g., by shredding. The more homogeneous the particle size distribution, the better the separation effect, because the influence of the particle size on the thiolysis reaction is minimized.

The separated PTU fractions can be further processed according to the method described above. In this way, polythiourethane resin raw materials comprising only fragments of a certain PTU group can be obtain which may facilitate further processing such as polymerization. Thus, high-quality PTUs with certain chemical, physical and optical properties can be obtained from the polythiourethane resin raw materials. This may allow the mixture of new and recycled polythiourethane resin raw materials without detrimentally affecting the envisaged properties.

In a further development, the method may comprise a dissolution step before the thiolysis step, wherein components of the composition comprising the polythiourethane are dissolved.

For example, a solvent selected from the group consisting of aliphatic hydrocarbons, such as cyclohexane, chlorinated hydrocarbons, such as dichloromethane, hydrocarbons containing at least one oxygen, sulfur and/or nitrogen heteroatom, dimethylformamide, dimethylacetamide, acetone, ethanol, and pyridine can be used in the dissolution step.

Polycarbonates can be dissolved in the dissolution step, preferably using pyridine and/or dichloromethane, more preferably pyridine, as solvent. The dissolved polycarbonates can be separated from the other potentially valuable materials that were contained in the composition comprising the polythiourethane and can be used in a good purity, e.g., as recycled PC, after the solvent has been removed, e.g., via precipitation or evaporation.

Preferably before dissolving polycarbonates, other soluble impurities can be removed by using a solvent not dissolving polycarbonates such as a solvent selected from the group consisting of aliphatic hydrocarbons, such as cyclohexane, and ethanol, wherein cyclohexane and acetone are preferred solvents. In other words, the dissolution step may be a 2-step method step wherein soluble impurities other than polycarbonates are dissolved and separated in a first step and polycarbonates are dissolved and separated in a second step.

In a further aspect, the invention provides a method for manufacturing a spectacle lens substrate. The method comprises a polymerization step wherein the polythiourethane resin raw material obtained according to a method as described above, e.g., the polythiol or polythiol mixture separated from the reaction product, is polymerized with one or more polyisocyanates, i.e., with a certain polyisocyanate or a plurality of chemically different polyisocyanates. Preferably, a polythiourethane resin can be obtained.

The polythiourethane resin raw material may be used with or without prior separation from further components of the reaction product, if any.

The polymerization step may comprise mixing of the polythiourethane resin raw material and the at least one polyisocyanate, molding and subsequent curing according to well-known polymerization methods. Further raw materials and/or other monomers can be added to influence the properties of the achieved polymer resin and the spectacle lens substrate.

The spectacle lens substrate can further be processed into a spectacle lens or intermediate products such as lens blanks according to well-known methods.

Further aspects are directed to a spectacle lens substrate manufactured from a polythiourethane resin raw material obtained by a method of producing a polythiourethane resin raw material for manufacturing of a spectacle lens substrate as described above, and a spectacle lens manufactured from such a spectacle lens substrate.

### BRIEF DESCRIPTION OF THE DRAWINGS

Further features, properties and advantages of the present invention will become clear from the following description of embodiments in conjunction with the accompanying drawings.
- Figure 1: shows a table (table 1) listing typical materials used in the optical industry, the associated material classes, and optical parameters.
- Figure 2: shows a flowchart illustrating a method of producing a polythiourethane resin raw material for manufacturing of spectacle lens substrate and a method for manufacturing a spectacle lens substrate.

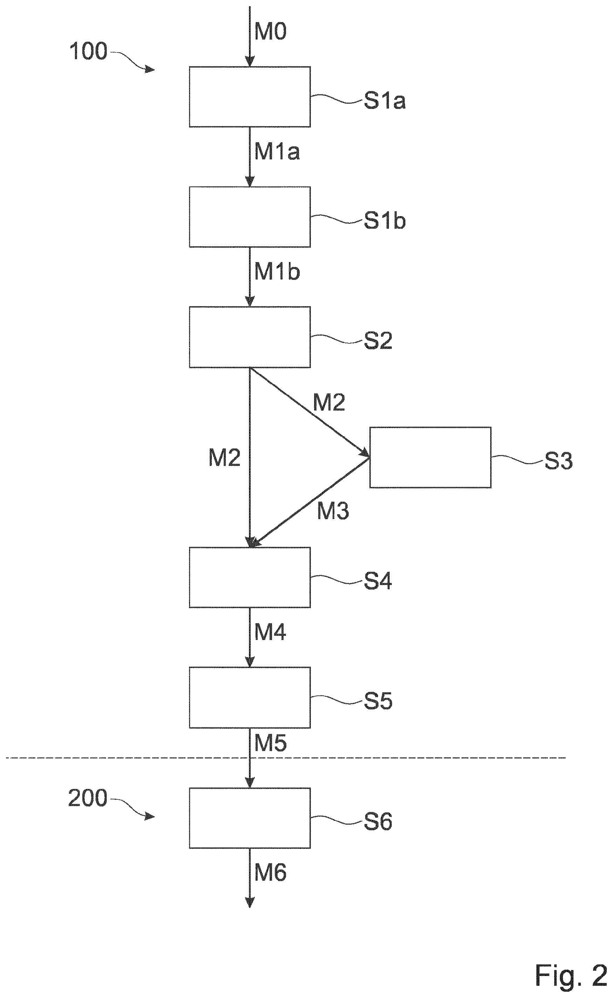

With reference to figure 2, exemplary methods 100, 200 of producing a polythiourethane resin raw material for manufacturing of spectacle lens substrate and for manufacturing a spectacle lens substrate are explained in more detail. Concepts known from the literature, such as thiolysis and alcoholysis, are modified and combined to enable the recycling of PTU-comprising mixed plastic waste from the optical industry in such a way that the PTU material can be reused in optical materials. Other comprised materials can potentially also be used in a valuable way.

In the following, an exemplary process flow for typical waste M0 from ophthalmic lens production as a composition comprising a polythiourethane is described. The typical waste M0 consists of milling chips from eyeglass lens production and comprises PC, e.g., a bisphenol A-based polycarbonate, a PTU, e.g., MR7 and/or MR8, PADC, and a PUR. Other substances such as a polyolefin, a hard coating, a primer coating, an abrasive, an adhesive tape or adhesive, catalysts, metals, UV absorbers, demoulding agents, plasticizers, dyes, anti-reflective coatings, polarizing films, machine oils or water may also be present as impurities.

Steps S1a to S2 enable the separation of the PTU from waste M0, wherein steps S1a and S1b are physical dissolution steps and step S2 is a thiolysis step. In step 1a, waste M0 is washed with a solvent or solvent mixture, such as cyclohexane, acetone or ethanol, and the solid is filtered off in order to remove soluble impurities from waste M0. Cyclohexane and acetone are particularly preferred. After step S1a, washed waste M1a is obtained.

In step S1b, washed waste M1a is extracted with a solvent or solvent mixture, such as pyridine or dichloromethane, to remove PC from M1a. Pyridine is preferred. The extract or solution comprises the PC dissolved out of M1a. This dissolved PC is now separated from the other potentially valuable materials that were comprised in M1a and can be used in a good purity, e.g., as recycled PC, after the solvent has been removed, e.g., via precipitation or evaporation.

The solid obtained after extraction of PC is washed with a solvent or solvent mixture and then dried. This solid is waste without PC M1b comprising PTU, PADC, and PUR.

In step S2, the waste without PC M1b is treated by thiolysis. The aim of step S2 is to only dissolve PTU by (partial) depolymerization. Under the chosen reaction conditions, PADC and PUR are insoluble and can be separated from the depolymerized PTU by filtration. For this purpose, M1b is mixed with a thiolysis reagent, a catalyst, and, optionally, with a solvent or solvent mixture and stirred at preferably 50 °C - 65 °C for preferably 30 min - 8 h.

Thiolysis reagents are thiols. In order to reduce the complexity of the thiolysis product, preferred thiolysis reagents are those thiols which have been used for the preparation of the PTU to be dissolved. Thus, in the example of MR7, 4-(mercaptomethyl)-1,8-dimercapto-3,6-dithiaoctane is a particularly preferred thiolysis reagent. Using such a thiol as thiolysis reagent also has an advantageous effect on further process steps such as steps S4 to S6, since in particular the purification of the target polythiourethanes raw material M5 is facilitated ultimately improving the quality of the spectacle lens substrate M6. Possible catalysts are basic organic catalysts with a pka (in acetonitrile) of 10 or higher. Particularly preferred is 1,5,7- triazabicyclo[4.4.0]dec-5-ene. A preferred solvent is pyridine.

The solid obtained after filtration can be washed with a solvent or solvent mixture and dried and comprises PADC and PUR which are now available in good purity for further specific recycling for PADC and PUR.

The filtrate obtained comprises the reaction products of PTU and the thiolysis reagent, i.e., depolymerized PTU, in addition to the thiolysis reagent used, the catalyst and possibly the solvent. The catalyst can be removed by washing, e.g., with water or slightly acidic aqueous solutions. The solvent can be removed, for example, by evaporating the solvent. The product obtained, consisting of the reaction products of the PTU and thiolysis reagent, is partly depolymerized PTU with thiolysis reagent, i.e., a composition comprising a thiourethane-based material and a thiolysis reagent M2. The reaction products of PTU and the thiolysis reagent comprise only structural elements of the lysed PTU if a thiol used to produce the PTU was used as a thiolysis reagent. The composition comprising the thiourethane-based material and the thiolysis reagent M2 is therefore a PTU on the one hand and a thiol on the other. In other words, the partly depolymerized PTU with thiolysis reagent M2 can be described as a mixture consisting of soluble fragments of the original solid and the thiolysis reagent. The composition comprising the thiourethane-based material and the thiolysis reagent M2 is a liquid and comprises an oligomeric thiourethane-based material.

If different PTU materials are comprised in waste M0, or waste without PC M1b, respectively, it can be advantageous or desirable to separate the different PTU materials within their substance class, e.g., PTUs which contain ester bonds from PTUs which do not contain ester bonds. For example, methods as described in JP 2023 - 085 102 A2 or JP 2023 - 019 137 A2 can be used for this purpose.

The method described in patent application PCT/EP2024/068918 filed on July 4, 2024 can also be used for separating different PTUs. This patent application describes the sequential depolymerization and separation of various PTU materials by thiolysis based on their reactivity to thiolysis conditions. For example, MR7 and MR8 can be separated from each other. In this way, two different compositions comprising a thiourethane-based material and a thiolysis reagent M2a and M2b are obtained, wherein M2a comprises the thiolysis products of MR7 and M2b comprises the thiolysis products of MR8.

At this point of method 100, a product, i.e., the composition comprising the thiourethane-based material and the thiolysis reagent M2, has been obtained from a complex waste M0 together with the other valuable materials PC, PADC, and PUR. Thus, two of the disadvantageous aspects of the prior art on the way to circularity of optical materials have been improved:
1. Mixed waste can be processed in such a way that other valuable material components can be separated from PTU materials. This not only facilitates further recycling of PTU materials, but also further recycling of the separated material classes, e.g., PC, PADC, and PUR, as these are available as recycling raw materials and can be fed into more specific processes due to the absence of other material classes.
2. The resulting soluble, liquid and partly depolymerized PTU with thiolysis reagent M2 is surprisingly an ideal raw material for PTU recycling, i.e., a thiourethane based material for producing a polythiourethane resin raw material - firstly, because the required or desired purities in terms of the amount of non-PTU material and the amount of different PTU materials are naturally achieved and secondly, because a soluble, liquid and oligomeric raw material has advantages over the solid, insoluble raw material used in US 2023/ 0 365 770 A1. Advantages are the drastically improved contact of the composition comprising the thiourethane-based material and the thiolysis reagent M2 with the alcoholysis and/or aminolysis reagent compared to the solid particles of the materials used in US 2023/ 0 365 770 A1, as well as the fact that the thiourethane-based material in material M2 is already partially depolymerized. This enables a higher reactivity and reaction times and/or temperatures can be reduced in order to further depolymerize the thiourethane-based material in material M2 to such an extent that monomers are obtained in subsequent method steps.

The material M2 still comprises the thiolysis reagent, as described above. Thus, it may be desirable to remove the thiolysis reagent in an optional step S3 to obtain a purified composition comprising the thiourethane-based material M3, i.e., partly depolymerized PTU. The purified composition comprising the thiourethane-based material M3 can then be used in method step S4. If the optional purification step S3 is not carried out, then the composition comprising the thiourethane-based material and the thiolysis reagent M2 is used as starting material for method step S4.

Possible reasons for performing the optional purification step S3 are:
- The thiolysis reagent used is not a thiol that was used to produce the original PTU. This may complicate the purification of the target polythiourethane resin raw material M5 and reduce the yield. This can be prevented if the thiolysis reagent is reduced to a minimum before carrying out the reaction step S4.
- As described above, the thiolysis reagent may be identical or very similar to the target polythiourethane resin raw material M5. Separation and purification of the thiolysis reagent after step S2 may provide higher yields in contrast to purification after later steps, such as steps S4 and/or S5. Thus, it may be desirable to perform the separation of the thiolysis reagent in step S3 to increase the yield.
- For the reaction step S4, i.e., alcoholysis and/or aminolysis, it can be advantageous if the liquid, oligomeric PTU is as concentrated as possible in order to reduce the required amount of alcoholysis or aminolysis reagent, respectively, and the reaction time.

The method of separating the thiolysis reagent is not restricted and, in principle, any known method can be used. These include, for example, distillation, rectification, extraction, and separation by chromatography. Distillation and rectification are preferred as additional materials for extraction or chromatography and potential contaminations can be avoided.

Another exemplary method is the extraction of the thiolysis reagent as alkali metal salts in aqueous solution. For this purpose, the material M2 is mixed with an alkali metal-containing base and water. Optionally, an organic solvent that cannot be mixed with water is added. The resulting aqueous phase comprises the alkali metal salts of the thiolysis reagent. The organic phase comprises the alkali metal salts of the soluble, oligomeric PTU and the organic solvent, if used.

The aqueous phase is now washed with an organic solvent and neutralized by adding an acid. The alkali metal salts of the thiolysis reagent are converted into the thiolysis reagent. This can be directly achieved by distillation. Alternatively, the thiolysis reagent can be extracted from the aqueous solution with an organic solvent and obtained from the organic extract after removal of the solvent.

The organic phase, which comprises the alkali metal salts of the liquid, oligomeric PTU, is neutralized with an acid, extracted with water and dried. The resulting purified composition M3 with liquid, oligomeric PTU as thiourethane-based material, but without thiolysis reagent can then be further processed in step S4.

The content of thiolysis reagent in composition M2 or M3 can be determined by known and suitable methods, for example by HPLC and the integration of the corresponding signals of the thiolysis reagent in composition M2 or M3 in comparison with a solution of the thiolysis reagent of known concentration.

The reaction step S4 converts the (purified) composition with the thiourethane-based material M2, M3 subsequently into a polythiol mixture, i.e., into a polythiourethane resin raw material M5, which is suitable for the manufacture of optical articles such as spectacle lens substrates. Both compositions M2 and M3 comprise at least 80 wt% PTU and according to the reaction conditions in steps S1a to S2 or S3, a PTU content of 90 wt% or even 95 wt% can be obtained. By using compositions M2 or M3, the reaction step S4 could be made even more efficient as compared to reaction conditions used in known methods, i.e., the aminolysis and/or alcoholysis in reaction step S4 can be carried out at lower temperatures than 50 °C and/or shorter reaction times than 1 h. The inventors attribute this effect to the fact that the thiourethane-based material in compositions M2 and M3 has already been partially depolymerized in step S2 and to the fact that a liquid starting material, i.e., composition M2 or M3, has no limitation in its reactivity due to the presence of phase boundaries (non-binding explanation of possible effects during the method steps).

After carrying out the reaction step S4 under optimized conditions, the reaction product M4 is obtained, which may comprise solvents, carbamate compounds, urea compounds, thiourethane compounds, and alcoholysis and/or aminolysis reagent in addition to the target polythiol or polythiols.

In step S5, the target polythiol or polythiols are separated from the reaction product M4, i.e., the polythiourethane resin raw material M5 is obtained after the separation step S5. The method of separating is not restricted and, in principle, any known method can be used. These include, for example, distillation, rectification, extraction, and separation by chromatography wherein extraction is preferred due to possibly higher yields and better purity. The polythiourethane resin raw material M5 can be used for the production of optical materials such as spectacle lens substrates M6 according to method 200.

Method 200 comprises a polymerization step S6, wherein the polythiourethane resin raw material M5 is reacted with polyisocyanates to obtain a spectacle lens substrate M6 as polymerization product. The spectacle lens substrate M6 can be used for the production of PTU spectacle lenses. By measuring the optical parameters of the resulting lenses and comparing them with the parameters of commercially available lenses, the suitability of M6 as spectacle lens substrate is demonstrated.

This represents a third and fourth improvement in relation to the state of the art on the path to circularity of optical materials:
3. The use of M2 or M3 as a starting material for the reaction step S4 allows to close the last remaining gap in the PTU material cycle in the optical industry. This is because mixed waste with significantly lower proportions of PTU, i.e., less than 80 wt% as required according to US 2023/ 0 365 770 A1 can also be considered as a raw material for PTU recycling. For example, mixed waste with a proportion of PTU of less than 50 wt% or even less than 40 wt% can be processed.
4. By using liquid compositions M2 or M3, the preferred reaction temperature could be reduced with the same or less reaction time.

It is to be noted that additional method steps such as shredding the waste M0 prior to method step S1a or further cleaning steps may be included.

Important aspects of the invention are:
The state of the art only considers the recycling of PTUs from a solid raw material with severe restrictions on the minimum content of PTU in the raw material. Other potentially valuable materials in the raw material, i.e., waste, in addition to the PTU are not considered.

In contrast, the suggested method expands the spectrum of recyclable waste with regard to its permitted composition and the spectrum of possible raw materials, whereby the newly established liquid raw material, which may be liquid and/or oligomeric, is advantageous compared to the already known raw material. Finally, the newly established raw material allows milder reaction conditions for alcoholysis and/or aminolysis.

The suggested method uses specific separation of the PTU components in the waste to be recycled so that other valuable fractions can be fed into further recycling processes as a defined mixture and not as undefined waste as in methods according to the state of the art.

### List of reference numerals

- 100: method of producing a polythiourethane resin raw material for manufacturing of spectacle lens substrate
- 200: method for manufacturing a spectacle lens substrate

- S1a: 1^{st} dissolution step
- S1b: 2^{nd} dissolution step
- S2: thiolysis step
- S3: purification step
- S4: reaction step
- S5: separation step
- S6: polymerization step

- M0: waste
- M1a: washed waste
- M1b: waste without PC
- M2: composition comprising a thiourethane-based material and a thiolysis reagent
- M3: purified composition with the thiourethane-based material
- M4: reaction product
- M5: polythiourethane resin raw material
- M6: spectacle lens substrate

## Claims

1. A method (100) of producing a polythiourethane resin raw material (M5) for manufacturing of a spectacle lens substrate (M6), the method (100) comprising a reaction step (S4), wherein a composition comprising a thiourethane-based material (M2, M3) is treated by alcoholysis and/or aminolysis to obtain a reaction product (M4) comprising the polythiourethane resin raw material (M5),
**characterized in that** the thiourethane-based material is a liquid material.

2. The method (100) as claimed in claim 1,
**characterized in that** the thiourethane-based material is a solution.

3. The method (100) as claimed in claim 1 or 2,
**characterized in that** the thiourethane-based material comprises an oligomeric thiourethane-based material.

4. The method (100) as claimed in any one of claims 1 to 3,
**characterized in that** the content of the thiourethane-based material in the composition (M2, M3) is at least 80 wt%.

5. The method (100) as claimed in any one of claims 1 to 4,
**characterized by** carrying out the reaction step (S4) at a temperature below 50 °C.

6. The method (100) as claimed in any one of claims 1 to 5,
**characterized by** carrying out the reaction step (S4) for a time period of less than 1 hour.

7. The method (100) as claimed in any one of claims 1 to 6,
**characterized by** comprising a separation step (S5), wherein a polythiol or a polythiol mixture is separated from the reaction product (M4).

8. The method (100) as claimed in any one of claims 1 to 7,
**characterized by** carrying out a thiolysis step (S2) before the reaction step (S4), wherein a composition comprising a polythiourethane is treated by thiolysis.

9. The method (100) as claimed in claim 8,
**characterized by** using in the thiolysis step (S2) a thiolysis reagent which is at least one selected from the group consisting of monothiols, dithiols, trithiols, and tetrathiols.

10. The method (100) as claimed in claim 8 or claim 9,
**characterized by** using in the thiolysis step (S2) a thiolysis reagent comprising at least one thiol, wherein the at least one thiol is identical to a thiol used for the synthesis of the polythiourethane to be treated by thiolysis.

11. The method (100) as claimed in any one of claims 8 to 10,
**characterized by** using in the thiolysis step (S2) a strong basic catalyst.

12. The method (100) as claimed in any one of claims 8 to 11,
**characterized in that** the thiolysis step (S2) uses a polar aprotic solvent.

13. The method (100) as claimed in any one of claims 8 to 12,
**characterized by** separating different polythiourethanes during the thiolysis step (S2).

14. The method (100) as claimed in any one of claims 8 to 13,
**characterized by** carrying out at least one dissolution step (S1a, S1b) before the thiolysis step (S2), wherein components of the composition comprising the polythiourethane (M0) are dissolved.

15. The method (100) as claimed in any one of claims 1 to 14,
**characterized in that** the thiourethane-based material originates from waste (M0) of polymeric spectacle lenses and/or waste (M0) from the manufacture of polymeric spectacle lenses.

16. A method (200) for manufacturing a spectacle lens substrate (M6),
**characterized by** comprising a polymerization step (S6) wherein the polythiourethane resin raw material (M5) obtained according to a method (100) as claimed in any one of claims 1 to 15 is polymerized with at least one polyisocyanate.

## Patentansprüche

1. Verfahren (100) zum Herstellen eines Polythiourethanharz-Rohmaterials (M5) zur Herstellung eines Brillenglassubstrats (M6), wobei das Verfahren (100) einen Reaktionsschritt (S4) umfasst, bei dem eine ein Material auf Thiourethanbasis umfassende Zusammensetzung (M2, M3) durch Alkoholyse und/oder Aminolyse behandelt wird, um ein Reaktionsprodukt (M4) zu erhalten, das das Polythiourethanharz-Rohmaterial (M5) umfasst,
**dadurch gekennzeichnet, dass** das Material auf Thiourethanbasis ein flüssiges Material ist.

2. Verfahren (100) nach Anspruch 1,
**dadurch gekennzeichnet, dass** das Material auf Thiourethanbasis eine Lösung ist.

3. Verfahren (100) nach Anspruch 1 oder 2,
**dadurch gekennzeichnet, dass** das Material auf Thiourethan-Basis ein oligomeres Material auf Thiourethan-Basis umfasst.

4. Verfahren (100) nach einem der Ansprüche 1 bis 3,
**dadurch gekennzeichnet, dass** der Gehalt des Materials auf Thiourethanbasis in der Zusammensetzung (M2, M3) mindestens 80 Gew.-% beträgt.

5. Verfahren (100) nach einem der Ansprüche 1 bis 4,
**dadurch gekennzeichnet, dass** der Reaktionsschritt (S4) bei einer Temperatur unterhalb von 50 °C durchgeführt wird.

6. Verfahren (100) nach einem der Ansprüche 1 bis 5,
**dadurch gekennzeichnet, dass** der Reaktionsschritt (S4) für einen Zeitraum von weniger als 1 Stunde durchgeführt wird.

7. Verfahren (100) nach einem der Ansprüche 1 bis 6,
**dadurch gekennzeichnet, dass** es einen Trennschritt (S5) umfasst, wobei aus dem Reaktionsprodukt (M4) ein Polythiol oder ein Polythiolgemisch abgetrennt wird.

8. Verfahren (100) nach einem der Ansprüche 1 bis 7,
**dadurch gekennzeichnet, dass** vor dem Reaktionsschritt (S4) ein Thiolyseschritt (S2) durchgeführt wird, bei dem eine ein Polythiourethan umfassende Zusammensetzung durch Thiolyse behandelt wird.

9. Verfahren (100) nach Anspruch 8,
**dadurch gekennzeichnet, dass** im Thiolyseschritt (S2) ein Thiolysereagenz eingesetzt wird, das mindestens eines aus der Gruppe bestehend aus Monothiolen, Dithiolen, Trithiolen und Tetrathiolen ist.

10. Verfahren (100) nach Anspruch 8 oder Anspruch 9,
**dadurch gekennzeichnet, dass** im Thiolyseschritt (S2) ein Thiolysereagenz verwendet wird, das mindestens ein Thiol umfasst, wobei das mindestens eine Thiol identisch mit einem Thiol ist, das zur Synthese des durch Thiolyse zu behandelnden Polythiourethans verwendet wurde.

11. Verfahren (100) nach einem der Ansprüche 8 bis 10,
**dadurch gekennzeichnet, dass** im Thiolyseschritt (S2) ein starker basischer Katalysator verwendet wird.

12. Verfahren (100) nach einem der Ansprüche 8 bis 11,
**dadurch gekennzeichnet, dass** der Thiolyseschritt (S2) ein polares aprotisches Lösungsmittel verwendet.

13. Verfahren (100) nach einem der Ansprüche 8 bis 12,
**gekennzeichnet durch** das Trennen unterschiedlicher Polythiourethane während des Thiolyseschritts (S2).

14. Verfahren (100) nach einem der Ansprüche 8 bis 13,
**dadurch gekennzeichnet, dass** vor dem Thiolyseschritt (S2) mindestens ein Auflösungsschritt (S1a, S1b) durchgeführt wird, wobei Komponenten der das Polythiourethan umfassenden Zusammensetzung (M0) gelöst werden.

15. Verfahren (100) nach einem der Ansprüche 1 bis 14,
**dadurch gekennzeichnet, dass** das Material auf Thiourethanbasis aus Abfall (M0) von Polymer-Brillengläsern und/oder Abfall (M0) aus der Herstellung von Polymer-Brillengläsern stammt.

16. Verfahren (200) zum Herstellen eines Brillenglassubstrats (M6),
**dadurch gekennzeichnet, dass** es einen Polymerisationsschritt (S6) umfasst, wobei das nach einem Verfahren (100) gemäß einem der Ansprüche 1 bis 15 erhaltene Polythiourethanharz-Rohmaterial (M5) mit mindestens einem Polyisocyanat polymerisiert wird.

## Revendications

1. Procédé (100) de production d'une matière première (M5) de résine de polythiouréthane pour la fabrication d'un substrat (M6) de verre de lunettes, le procédé (100) comprenant une étape de réaction (S4), dans lequel une composition comprenant une matière à base de thiouréthane (M2, M3) est traitée par alcoolyse et/ou aminolyse pour obtenir un produit de réaction (M4) comprenant la matière première (M5) de résine de polythiouréthane, **caractérisé en ce que** la matière à base de thiouréthane est une matière liquide.

2. Procédé (100) selon la revendication 1,
**caractérisé en ce que** la matière à base de thiouréthane est une solution.

3. Procédé (100) selon la revendication 1 ou 2,
**caractérisé en ce que** la matière à base de thiouréthane comprend une matière oligomérique à base de thiouréthane oligomérique.

4. Procédé (100) selon l'une quelconque des revendications 1 à 3,
**caractérisé en ce que** la teneur de la matière à base de thiouréthane dans la composition (M2, M3) est d'au moins 80 % en poids.

5. Procédé (100) selon l'une quelconque des revendications 1 à 4,
**caractérisé par** la mise en œuvre de l'étape de réaction (S4) à une température inférieure à 50 °C.

6. Procédé (100) selon l'une quelconque des revendications 1 à 5,
**caractérisé par** la mise en œuvre de l'étape de réaction (S4) pendant une durée inférieure à 1 heure.

7. Procédé (100) selon l'une quelconque des revendications 1 à 6,
**caractérisé en ce qu'**il comprend une étape de séparation (S5), dans lequel un polythiol ou un mélange de polythiol est séparé du produit de réaction (M4).

8. Procédé (100) selon l'une quelconque des revendications 1 à 7,
**caractérisé par** la mise en œuvre d'une étape de thiolyse (S2) avant l'étape de réaction (S4), dans lequel une composition comprenant un polythiouréthane est traitée par thiolyse.

9. Procédé (100) selon la revendication 8,
**caractérisé par** l'utilisation dans l'étape de thiolyse (S2) d'un réactif de thiolyse qui est au moins un choisi dans le groupe constitué par les monothiols, les dithiols, les trithiols et les tétrathiols.

10. Procédé (100) selon les revendications 8 ou la revendication 9,
**caractérisé par** l'utilisation dans l'étape (S2) de thiolyse d'un réactif de thiolyse comprenant au moins un thiol, où l'au moins un thiol est identique à un thiol utilisé pour la synthèse du polythiouréthane à traiter par thiolyse.

11. Procédé (100) selon l'une quelconque des revendications 8 à 10,
**caractérisé par** l'utilisation dans l'étape de thiolyse (S2) d'un catalyseur basique fort.

12. Procédé (100) selon l'une quelconque des revendications 8 à 11,
**caractérisé en ce que** l'étape de thiolyse (S2) utilise un solvant aprotique polaire.

13. Procédé (100) selon l'une quelconque des revendications 8 à 12,
**caractérisé par** la séparation de différents polythiouréthanes au cours de l'étape de thiolyse (S2).

14. Procédé (100) selon l'une quelconque des revendications 8 à 13,
**caractérisé par** la mise en œuvre d'au moins une étape de dissolution (S1a, S1b) avant l'étape de thiolyse (S2), dans lequel des composants de la composition comprenant le polythiouréthane (M0) sont dissous.

15. Procédé (100) selon l'une quelconque des revendications 1 à 14,
**caractérisé en ce que** la matière à base de thiouréthane provient de déchets (M0) de verres de lunettes polymériques et/ou de déchets (M0) provenant de la fabrication de verres de lunettes polymériques.

16. Procédé (200) de fabrication d'un substrat (M6) de verre de lunettes,
**caractérisé en ce qu'**il comprend une étape de polymérisation (S6), dans lequel la matière première (M5) de résine de polythiouréthane obtenue selon un procédé (100) selon l'une quelconque des revendications 1 à 15 est polymérisée avec au moins un polyisocyanate.
